# EUROPEAN PATENT APPLICATION

(11) **EP 1 039 725 A2**
(43) Date of publication of application: **27.09.2000**
(21) Application number: 00101457.0
(22) Date of filing: 25.01.2000
(51) Int. Cl.: H04L 29/12

(54) **Communication apparatus and remote control method**

(30) Priority: 22.02.1999 JP 4267199
(71) Applicant: Hitachi, Ltd., Chiyoda-ku, Tokyo 101-8010 (JP)
(72) Inventor: Ando, Nobuyoshi, Sagamihara-shi (JP); Kawano, Katsumi, Kawasaki-shi (JP); Kobayashi, Nobuhisa, Hitachinaka-shi (JP); Mitsuyoshi, Naoki, Hitachinaka-shi (JP)
(74) Representative: Strehl Schübel-Hopf & Partner

(57) **Abstract**

A router stores information on the types of other devices and, for use in relaying an inquiry message about the type of a device, sends a device type response message to an inquiry source on behalf of the device. When a device is newly connected to a network, the device acquires a network identifier from other devices connected to the network to which the device is directly connected to store the network identifier as its own network identifier, registers its own device identifier with the router, and registers the device information and, if appropriate, device application information with the router.

## Description

### BACKGROUND OF THE INVENTION

The present invention relates to a communication apparatus that relays communication information. More particularly, for use in a distributed system where a plurality of networks are interconnected, the present invention relates to a router that interconnects the networks and performs communication message routing, and also to a procedure for connecting devices in the distributed system to a network and a procedure for connecting a router to a network. In particular, the present invention relates to a router that is used in a home system or a building system where a plurality of different networks are integrated and to a procedure for connecting devices or a router to a network.

In a conventional distributed system where a plurality of networks are interconnected, the types of devices connected to each network or the types of application software installed on the devices have been managed locally by each device or centrally by a special device such as a directory server. This prior art is described in A.S. Tandenbaum, "Distributed Operating System", pages 56-59, 1995, PRENTICE HALL.

On the other hand, routers and gateways are already popular as network devices that interconnect a plurality of networks for communication message routing and communication message filtering. This prior art is described in "Point-Illustrated Communication Protocol Encyclopedia", pages 464-466, 1996, ASCII Inc.

### SUMMARY OF THE INVENTION

In a distributed system where a plurality of networks are interconnected, the problems given below arise especially when a radio system, an electric light wire, or an infrared ray or a combination of them is used as a network medium in a home system or a building system where installed devices in the home or building are interconnected. It should be noted that, in a distributed system to which the present invention is applied, one of the radio system, the electric wire, and the infrared ray need not be included as the network medium.
(1) A network included in a distributed system sometimes has a low transmission reliability. In particular, as compared with a wired network, a network using a radio system, an electric light wire, or an infrared ray is less reliable and, in addition, there are hidden terminals at which signals do not arrive. Furthermore, because users are more likely to turn on or off the switches of the devices in the home or the building, communication is not always possible. For this reason, even if the device centrally managing the system sends an inquiry about which devices are connected to the network and what application software is installed on the devices, the response is not always returned. Re-transmission control, if performed, degrades the responsiveness. Thus, it is difficult to check the system device configuration and the installed application software correctly and responsively.
(2) Even when one device centrally manages the information about what devices are connected to the network and what application software is installed, the information is not always returned to the centrally-managing device correctly and responsively because the network using a radio system, an electric light wire, or an infrared ray as a medium is less reliable in transmission than a wired network.

When expanding the network, the conventional technology has required the user to do many settings. This setting work is very tedious. More specifically, it is difficult for users in the home or the building to do the setting work because of the problems given below. Note that the problems given below were found by the inventor of the present invention.
(1) Network identifiers (for example, network addresses used by the Internet protocol) must be unique. This requires the user to manage free identifiers and, when the network is expanded (that is, when a router is connected), the user must assign one of the free identifiers to the router.
(2) The user must also set up routing information for the router.

Moreover, communicating with a device that moves from one network to another involves very tedious work, giving a heavy load on the network and its devices. That is, the following problems have arisen.
(1) The accessing device must check all the possible devices in the system, one device at a time, to find which network the desired device is connected to until the desired device is found. This increases the load of the network and each device.
(2) Because it is not known when the desired device is connected to the network, the accessing device must check, at a regular interval, all possible devices to find which network in the system the desired device is connected to until the desired device is found. This increases the load of the network and each device unnecessarily.

To solve the above problems, the present invention uses the following means as an approach to the solution.
(1) For use in a distributed system in which a plurality of networks are interconnected and which is composed of devices to which addresses are assigned according to the same addressing system, a router interconnecting the networks and performing communication message routing comprises means for getting information (device information) on other devices connected to the network to which the router is directly connected; means for storing the information; and means for transmitting the information in response to a request from some other device.
   The device information is information identifying a device and distinguishing it from other devices. The device information includes function information on the functions of each device. This function information indicates the functions of the device and may be one of information indicating the type of the device and information on application software of the device (device application information). The device application information may be information indicating the type of an application program. The device information may further include address information indicating an address of the device in the network. The device information may also include information notifying other devices of what is the device itself, such as a device profile.
(2) When a device information acquisition request message is received from device A to another device B connected to the network to which the router is connected, the router creates a response message including requested information on behalf of device B, discards the request message, and sends the response message to device A.
(3) For use in a distributed system in which a plurality of networks are interconnected and which is composed of devices each having an address composed of a network identifier uniquely identifying one of the plurality of networks and a device identifier uniquely identifying the device within the network, and in which the router performs communication message routing based on the network identifier included in a destination address of a communication message, a device newly connected to the network comprises means for getting the network identifier from other devices (including other routers) connected to the network and storing it as its own network identifier, a step for registering its own device identifier with the router, and a step for registering the device information and, as necessary, the device application information with the router.
(4) When a router (router A) is newly connected to network A, router A executes the method described below. The network connection method comprises the steps of getting device information or device application information on other devices, connected to network A to which router A is to be connected, from another router B connected to network A to which the router is to be connected; determining an unused network identifier from the routing information stored in router B; assigning the network identifier to network B to which router A is to be newly connected; getting the routing information; and notifying other routers that network B has been connected. The routing information is information used to determine to which network the information is to be sent. For example, the routing information is a plurality of pairs each composed of a network identifier and the corresponding destination router address.
(5) For use in a system in which a plurality of networks are interconnected with the routers and which is composed of devices, each having an address composed of a network identifier uniquely identifying one of the plurality of networks and a device identifier uniquely identifying the device in the network as well as an identifier uniquely identifying the device at least within the distributed system, the network connection method allows a plurality of related routers to work together, after device A is moved from one network to another and is connected to a network in the method described in (4), to add or delete the device information or device application information of device A to or from the routers. The plurality of routers refer to the routers in the system. The plurality of routers may all the routers in the system or some of them. When the plurality of routers refer to some of the routers in the system, they may be those connected to the network to which the router is connected.
(6) For use in a system in which a plurality of networks are interconnected with the routers and which is composed of devices, each having an address composed of a network identifier uniquely identifying one of the plurality of networks and a device identifier uniquely identifying the device in the network as well as an identifier uniquely identifying the device at least within the distributed system, the network connection method for use by device B which access device A when device A is moved from one network to another comprises the steps of detecting that device A has been moved; recognizing the identity of device A before and after the movement; getting the address of device A after movement; and changing, after the movement, the association of the identifier identifying device A within device B with the address of device A.

To detect that device A is moved, device A may broadcast an operation start notification message so that the routers may detect it.

By providing the means described above, the objects of the present invention are as follows:
(1) To provide information as to what kind of device is used in the system more reliably without increasing the device or network load, even when the network reliability is low, or there is a hidden terminal, or a device is not always ready for communication.
(2) To implement the plug-and-play feature with automatic routing-information setup in mind to achieve (1) and to allow the user to add devices to a network easily.
(3) To implement the plug-and-play feature with automatic routing-information setup in mind to allow the user to add a network to the system easily.
(4) To detect that a device is moved and thus the address is changed with no significant increase in the load to allow applications accessing the device to access it with the same identifier that was used before the movement.
(5) To immediately delete routing information on a deleted device from the table in the router, when the device is moved, to make the routing table smaller and more accurate.

### BRIEF DESCRIPTION OF DRAWINGS

FIG. 1 is a diagram showing an example of the configuration of a system to which the present invention is applied.
FIG. 2 is a diagram showing a modeled configuration of the system, shown in FIG. 1, to which the present invention is applied.
FIG. 3 is a diagram showing an example of the configuration of a high-level address.
FIG. 4 is a diagram showing an example of the internal configuration of a device.
FIG. 5 is a diagram showing an example of the internal configuration of a router.
FIG. 6 is a diagram showing an example of the configuration of an API conversion table and showing an example of the contents maintained in device A1.
FIG. 7 is a diagram showing an example of the configuration of a local device information table and showing an example of the contents maintained in device C1.
FIG. 8 is a diagram showing an example of the configuration of a routing table and showing an example of the contents maintained in router B.
FIG. 9 is a diagram showing an example of the configuration of an address conversion table and showing an example of the contents maintained in device B1.
FIG. 10 is a diagram showing an example of the configuration of a device information table.
FIG. 11 is a diagram showing an example of the format of a message transferred between devices during request/response communication.
FIG. 12 is a diagram showing an example of the format of an operation start notification message.
FIG. 13 is a PAD diagram showing an example of the processing flow of a transmission unit 61.
FIG. 14 is a PAD diagram showing the overall processing flow of a reception unit 62.
FIG. 15 is a PAD diagram showing the flow of the response message reception processing of the reception unit 62.
FIG. 16 is a PAD diagram showing the flow of the request message reception processing of the reception unit 62.
FIG. 17 is a PAD diagram showing the flow of the router processing of the reception unit 62.
FIG. 18 is a PAD diagram showing the flow of the operation start notification message reception processing of the reception unit 62.
FIG. 19 is a PAD diagram showing the flow of the operation start notification message reception processing of an API conversion unit 63.
FIG. 20 is a diagram showing the contents of the routing table maintained in a router in the system configuration shown in FIG. 2.
FIG. 21 is a diagram showing the contents of the address conversion table maintained in a router in the system configuration shown in FIG. 2.
FIG. 22 is a diagram showing the contents of the device information table maintained in a router in the system configuration shown in FIG. 2.
FIG. 23 is a PAD diagram showing the flow of connection processing at device connection time.
FIG. 24 is a PAD diagram showing the flow of connection processing at router connection time.
FIG. 25 is a diagram showing another example of the device information table.
FIG. 26 is a diagram showing an example of the hardware configuration of a device.
FIG. 27 is a diagram showing an example of the hardware configuration of a router.

### DESCRIPTION OF THE EMBODIMENTS

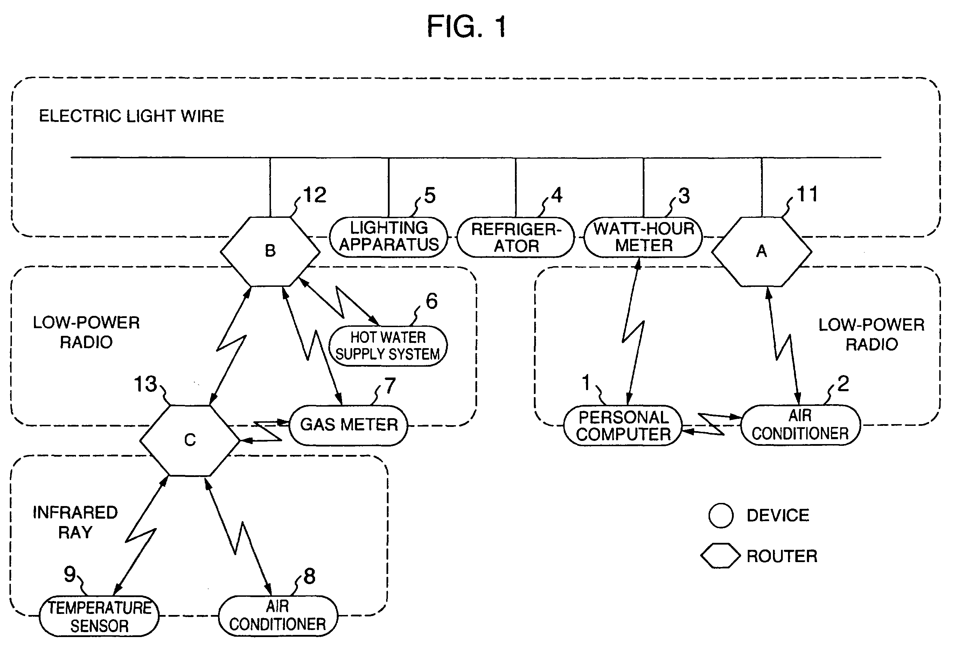

FIG. 1 is a diagram showing an example of a distributed system in which the present invention is implemented. The present invention may be applied to a wide variety of systems in which a plurality of networks are interconnected. An embodiment according to the present invention will be described with a home network system as an example. In this system, electrical appliances are interconnected via a network built using an electric light wire, a low-power radio system, or an infrared ray for remote control or sensor information notification.

In FIG. 1, numbers 1-9 refer to a personal computer, an air conditioner, a watt-hour meter, a refrigerator, a lighting apparatus, a hot water supply system, a meter, an air conditioner, and a temperature sensor, respectively. In FIG. 1, the devices referred to by numbers 1-2 have the low-power radio communication function, the devices referred to by numbers 3-5 have the electric light wire communication function, the devices referred to by numbers 6-7 have the low-power radio communication function, and the devices referred to by numbers 8-9 have the infrared ray communication function. Numbers 11-13 refer to routers which relay messages from a device in one communication mode to another device in another communication mode for message transfer or routing. FIG. 1 shows an example of system configuration to which the present invention applies. The present invention is not limited to this configuration but may be applied to any type of device that has a communication function and to any communication mode using other communication media such as a fiber optic cable.

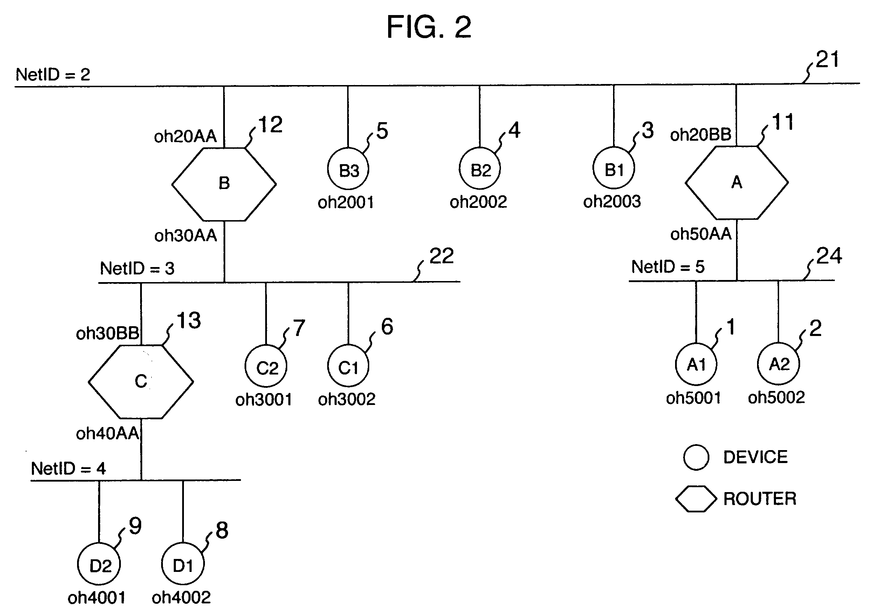

FIG. 2 is a diagram showing a system modeled on the system shown in FIG. 1. In the following description, the modeled system in FIG. 2 will be used. Numbers 1-9 in FIG. 2 correspond to numbers 1-9 in FIG. 1. They are referred to as device A1, device A2, device B1, device B2, device B3, device C1, device C2, device D1, and device D2, respectively. Also, numbers 11-13 correspond to the routers 11-13 in FIG. 1. The communication ranges, 21-24, each using one of a low-power radio system, an electric light wire, and an infrared ray, are treated as networks. Although a low-power radio system, an electric light wire, and an infrared ray refer essentially to physical media, they are each used, in the following description, to identify a range where a specific communication protocol is used assuming that each range uses its own communication protocol. Therefore, two low-power radio systems, each containing devices using their own communication protocol, are treated as different networks in the system. In addition, two networks using the same protocol, wherein the protocol is set up not to communicate with each other, are treated as different networks.

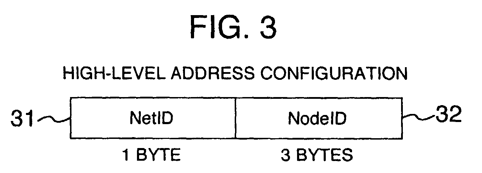

In this system, a high-level address, such as the one shown in FIG. 3, is defined to allow a plurality of networks, each having its own communication protocol, to be processed with a single protocol. The communication processing mode for this system will be described later. That is, to integrate a plurality of heterogeneous networks into one system, this system provides an integrated addressing system to eliminate the need for application software programs to worry about addresses or communication protocols that differ from network to network. In the following description, the addresses used in an individual network to be integrated are called low-level addresses, the communication protocol used in an individual network is called a low-level communication protocol, the addresses used in an integrated network are called high-level addresses, and the communication protocol used in an integrated network is called a high-level communication protocol.

In FIG. 3, number 31 refers to a network identifier field that is one byte long, and number 32 refers to a device identifier field that is three bytes long. The device identifier field 32 contains an identifier (that is, device identifier NodeID) that uniquely identifies a device in the network (hereinafter called a subnet) corresponding to a low-level communication protocol. The network identifier field 31 contains a subnet identifier (network identifier NetID) that is unique within the system. For example, FIG. 2 shows the subnet identifiers and high-level addresses used in the system shown in FIG. 1. In FIG. 2, network identifiers (NetID) 2, 3, 4, and 5 are assigned to the networks 21-24 and, based on these identifiers, the high-level addresses of the devices 1-9 are defined as 0h5002, 0h5001, 0h2003, 0h2002, 0h2001, 0h3002, 0h3001, 0h4002, and 0h4001, respectively. In addition, the addresses of routers 11-13 are defined as follows. That is, the address of the router 11 on the NetID=5 side, the address of the router 11 on the NetID=2 side, the address of the router 12 on the NetID=2 side, the address of the router 12 on the NetID=3 side, the address of the router 13 on the NetID=3 side, and the address of the router 13 on the NetID=4 side are defined as 0h50AA, 0h20BB, 0h20AA, 0h30AA, 0h30BB, and 0h40AA, respectively. The high-level address of a router is defined for each subnet to which the router is connected.

Next, the internal configuration of the devices and routers shown in FIG. 2 will be described.

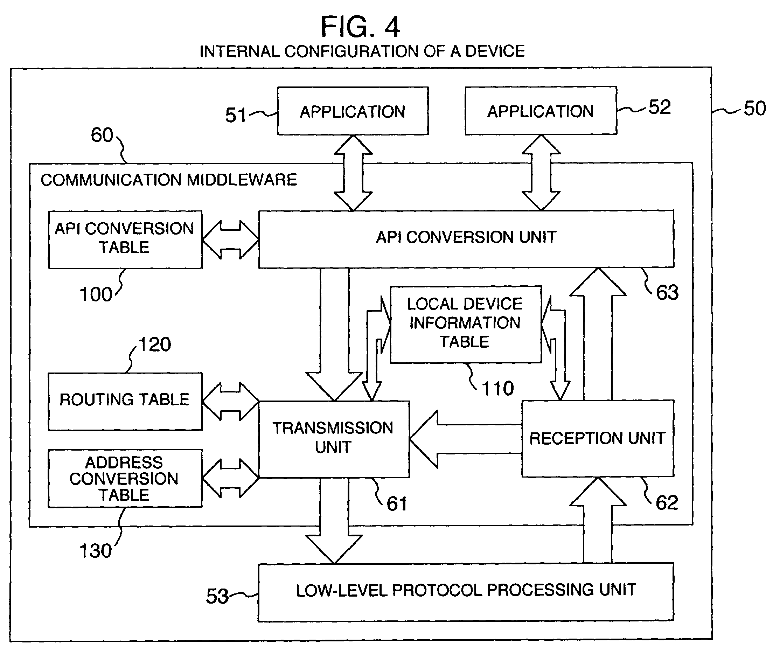

First, the internal configuration of the devices will be described with reference to FIG. 4.

Number 50 in FIG. 4 refers to the generalized configuration of the devices 1-9. The device 50 comprises applications 51 and 52, a low-level protocol processing unit 53, and communication middleware 60. The applications 51 and 52 are, for example, a control program in an air conditioner or a refrigerator for controlling the air conditioner and the refrigerator. On a personal computer, a program that performs the remote control of devices or monitors electric energy with the use of the communication of this system is one of those application programs. Although there are two application programs in FIG. 4, any number of application programs may be used as long as there are one or more. The low-level protocol processing unit 53 executes the specific communication function for each subnet to which the device is connected. It physically transmits messages between low-level communication protocol processing and the actual network. Note that the low-level protocol processing unit 53 uses low-level addresses, defined for each low-level communication protocol, for communication. Therefore, at transmission time, the communication middleware 60 uses a low-address to specify the transmission destination device and sends a transmission request for transmission of data. On the other hand, at reception time, reception data as well as the low-address of the transmission source device is passed to the communication middleware 60.

Referring to FIG. 4, the communication middleware 60 comprises a transmission unit 61, a reception unit 62, an API conversion unit 63, an API conversion table 100, a local device information table 110, a routing table 120, and an address conversion table 130. The transmission unit 61 transmits a message in response to a request from the API conversion unit 63 or the reception unit 62. The reception unit 62 processes a message received from the low-level protocol processing unit 53. The API conversion unit 63 issues a request to, and receives a response from, other devices in response to a request from the applications 51-52 and, in particular, manages the correspondence between the identifiers of other devices and the high-level addresses. The API conversion table 100 contains information for managing this correspondence. The local device information table 110 contains information on the local device itself, such as the high-level address of the device 50, that is open to other devices. The routing table 120 manages addresses of routers used to transmit messages from this device to others. It maintains the correspondence between the NetIDs of destination devices and router addresses. The address conversion table 130 manages the correspondence between the high-level address and the low-level address of a communication partner. Examples of these tables will be described later.

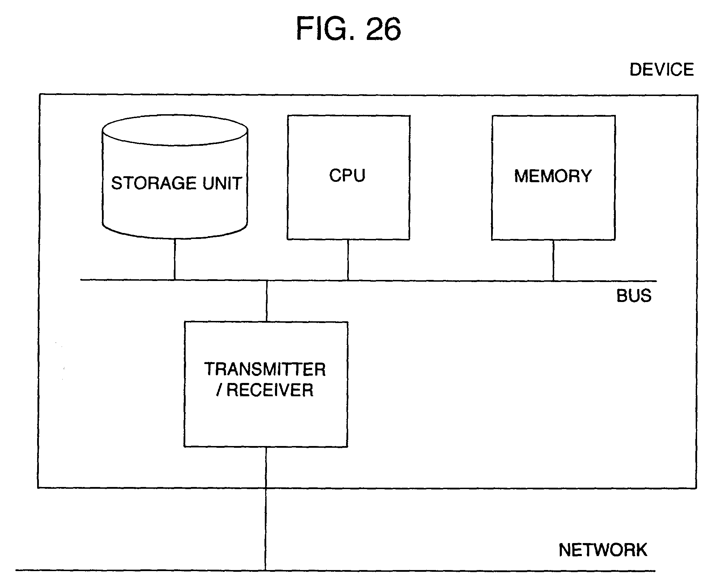

The hardware configuration shown in FIG. 4 is as shown in FIG. 26. The CPU executes the function of the device described above. The programs to execute the function are stored in the storage unit. It should be noted that the transmitter/receiver may be divided physically into a transmitter and a receiver.

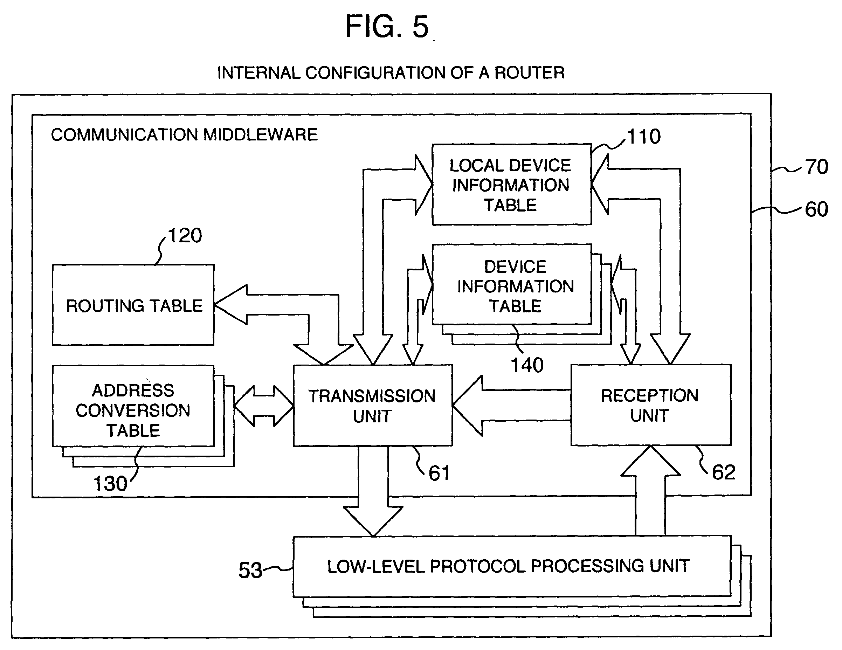

Next, the internal configuration of a router will be described with reference to FIG. 5.

Number 70 in FIG. 5 refers to the generalized configuration of the routers 11-13. The router 70 comprises the low-level protocol processing units 53 and the communication middleware 60. It should be noted that a plurality of low-level protocol processing unit 53 are configured according to the number of subnets to which the router is connected.

Referring to FIG. 5, the communication middleware 60 comprises the transmission unit 61, the reception unit 62, the local device information table 110, the routing table 120, the address conversion table 130, and a device information table 140. The transmission unit 61 transmits a message in response to a request from the API conversion unit 63 or the reception unit 62. This is similar to the transmission unit 61 shown in FIG. 4. The reception unit 62 processes a message received from the low-level protocol processing unit 53. This is similar to the reception unit 62 shown in FIG. 4. These units may have the similar functions but need not necessarily have the functions which are used only by either the device or the router. That is, these units need not have unnecessary functions. The minimum required functions will be described later. The local device information table 110 contains information on the local router itself, such as the high-level address of the router 70, that is open to other devices. The routing table 120 manages addresses of routers used to transmit messages from this router to others. It maintains the correspondence between the NetIDs of destinations and the addresses of routers. The addresses of routers are the addresses of the routers connected to the subnet to which this router is connected. Hereinafter, another router connected to the subnet to which this router is connected is called a "neighboring router." The address conversion table 130 manages the correspondence between the high-level addresses and the low-level addresses of the devices in the subnet to which the router is directly connected. It should be noted that a router connects to a plurality of subnets and therefore the address conversion table 130 is provided for each subnet. The device information table 140 manages information on all the devices in the subnet to which this router is connected. It is used to manage device types and device application types.

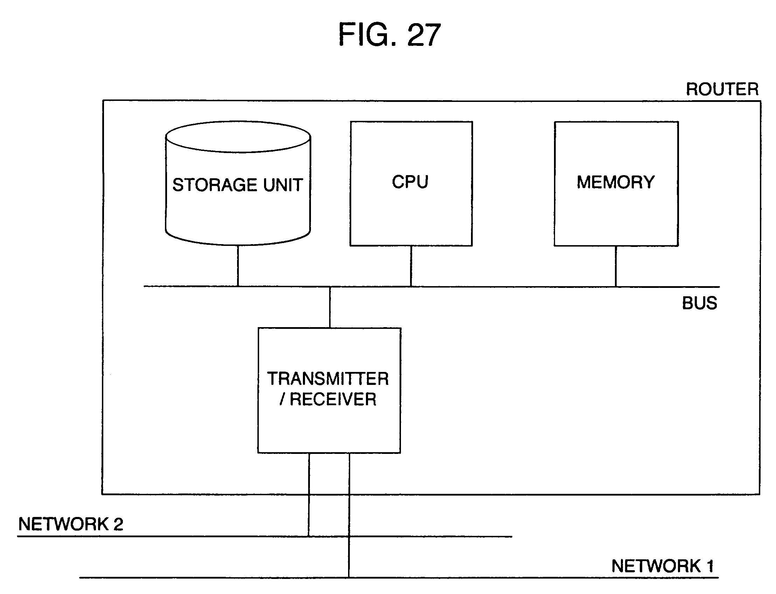

The hardware configuration shown in FIG. 5 is as shown in FIG. 27. The CPU executes the function of the device described above. The programs to execute the function are stored in the storage unit. There may be two or more networks to which the transmitter/receiver is connected. It should be noted that the transmitter/ receiver may be divided physically into a transmitter and a receiver.

Next, the configuration of the tables stored in the device 50 and the router 70 will be described.

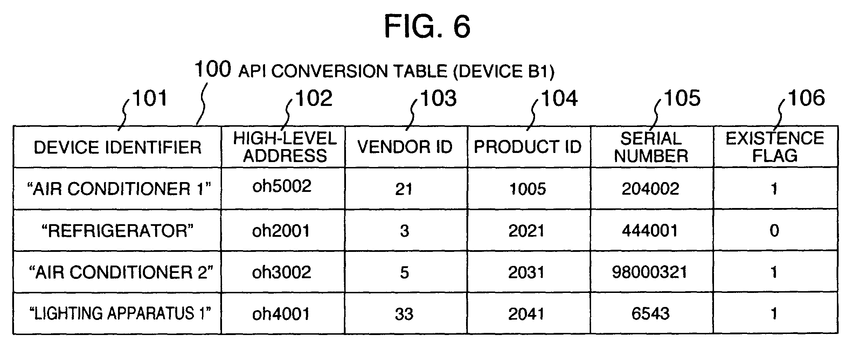

FIG. 6 shows an example of the API conversion table 100. The API conversion table 100 contains information on the correspondence between the identifiers of other devices and high-level addresses. This correspondence information is used by the API conversion unit 63 to convert the identifier of some other device to the high-level address. The API conversion table 100 contains a plurality of entries, each composed of a device identifier 101, a high-level address 102, a vendor ID 103, a product ID 104, a serial number 105, and an existence flag 106. The device identifier 101 is an identifier used by the applications 51-52 to identify some other device. For example, character strings "air conditioner 1", "air conditioner 2", "refrigerator", "lighting apparatus 1" or the values identifying these devices are used. The high-level address 102 is the high-level address of a device identified by the device identifier 101. The vendor ID 103 that is the manufacturer's identifier, the product ID 104 that is the identifier of the product, and the serial number 105 that is the manufacturing serial number are combined to globally and uniquely identify (within the system) the device identified by the device identifier 101. It is assumed that the meanings of the values stored in the vendor ID 103, the product ID 104, and the serial number 105 conform to the rule that is set up, for example, by the standard. These values are stored also in the local device information table 110 which will be described later. The existence flag 106 is a flag indicating whether or not the device on this row actually exists in the system.

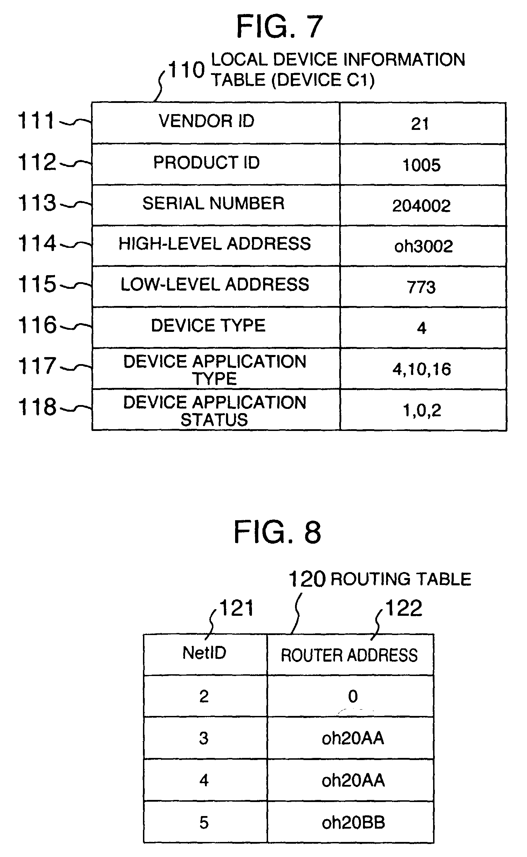

FIG. 7 shows an example of the configuration of the local device information table 110. The local device information table 110 contains information on the local device itself. For example, it contains a vendor ID 111, a product ID 112, a serial number 113, a high-level address 114, a low-level address 115, a device type 116, a device application type 117, and a device application status 118. The information stored in the vendor ID 111, the product ID 112, and the serial number 113 globally and uniquely identifies (within the system) the device. The high-level address 114 contains a communication address used by the communication middleware 60, while the low-level address 115 contains a communication address used by the low-level protocol processing unit 53. The device type 116 contains a code uniquely indicating the type of device. For example, it contains a code indicating the type of hardware such as a refrigerator, an air conditioner, a personal computer, or a panel monitor. The device application type 117 contains the codes each uniquely indicating the type of application 51 or 52 that is installed on the device. For example, the refrigerator control program is installed on a refrigerator, and the air conditioner control program is installed on the air conditioner. On the other hand, because various types of programs, such as the power DSM control application or home security control application, are installed on a personal computer, the device application type 117 contains the codes indicating the software programs installed on the device. For example, when the application is an object-oriented application, the class identifier of the object corresponds to this code. The device application status 118 contains the code indicating the status of the application 51 or 52 installed on the device. For example, the code is stored in this field, wherein the value of "0" indicates that the device is stopped, the value of "1" indicates that the device is being initialized, the value of "2" indicates that the device is in operation, and the value of "3" indicates that the device is stopped because of a failure. One code is stored in this field for each application entity. So, if two applications of a type are installed, the codes each indicating the status are stored. For example, when the application is an object-oriented application, this field contains a combination of the class identifier, instance identifier, and instance status. It is assumed that the meanings of the values stored in the vendor ID 103, the product ID 104, the serial number 105, device application type 117, and device application status 118 conform to the rule that is set up, for example, by the standard.

FIG. 8 shows an example of the routing table 120. The routing table 120 contains the high-level addresses of the neighboring routers via which messages are to be sent from the device having the routing table to the devices connected to the subnet indicated by the network identifier NetID. That is, the table is configured so that a plurality of pairs, each composed of a NetID 121 and a router address 122, are stored. FIG. 8 shows an example of the routing table 120 in the router 11 shown in FIG. 2. The table contains entries that indicate messages to be sent to the devices connected to the subnet whose NetID is 3 or 4 must be sent via the router whose high-level address is 0h20AA. It also contains entries that indicate messages to be sent to the devices connected to the subnet whose NetID is 2 or 5 may be sent directly from the router (router 11 in this case) to the devices because these subnets are connected directly to the router.

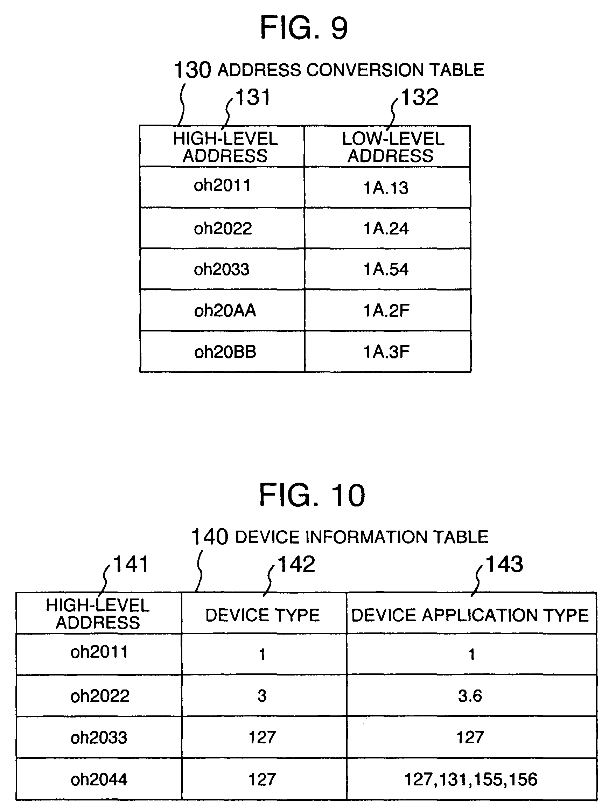

FIG. 9 shows an example of the configuration of the address conversion table 130. The address conversion table 130 contains information on the correspondence between high-level addresses and low-level addresses. That is, it is configured to contain a plurality of pairs of a high-level address 131 and a low-level address 132.

FIG. 10 shows an example of the configuration of the device information table 140. The device information table 140, stored in a router, contains a plurality of entries about all the devices connected to the subnets to which the router connects. Each entry is composed of a high-level address 141, a device type 142, and a device application type 143. The values of the device type 142 and the device application type 143 are those stored in the local device information table 110 shown in FIG. 7.

Next, the format of a message that is transmitted will be described.

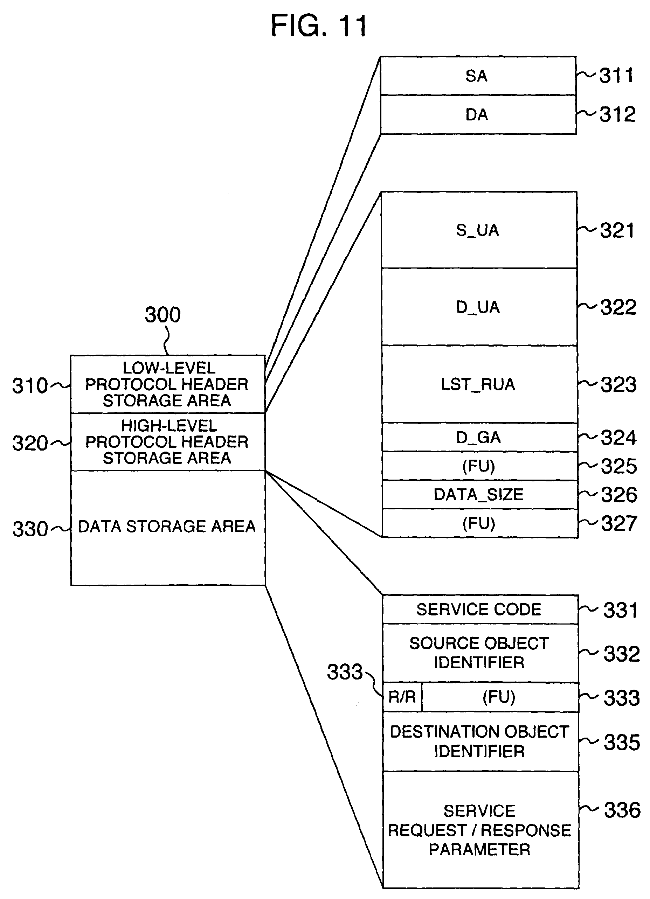

FIG. 11 shows an example of a request/response communication message that is issued to an application or the communication middleware to execute, or receive a response from, object services. A message 300 comprises a low-level protocol header storage area 310, a high-level protocol header storage area 320, and a data storage area 330. The low-level protocol header storage area 310 comprises an SA 311 which is a source device low-level address for communication between devices within a subnet using the low-level protocol and a destination device low-level address DA 312. That is, communication between devices via a router is performed by combining communications between a device and a router and between routers with the use of low-level protocols, the low-level addresses are stored in these areas. That is, when a message is sent to a device via a router, the DA contains the low-level address of the router; when a message is sent from a router to a device, the SA contains the low-level address of the router. Although the low-level protocol header storage area 310 contains other communication information, it is not directly related to the present invention and therefore its description is omitted here. The high-level protocol header storage area 320 contains a source device high-level address S_UA 321 used to communicate a message between devices in the system using a high-level protocol, a destination device high-level address D_UA 322, a LST_RUA 323 that is the low-level address of the last router via which a message was sent, a destination device group address D_GA 324, areas FU 325 and FU 327 reserved for future use, and DATA_SIZE 326 that contains the size of data stored in the data storage area 330. The destination device group address D_GA 324 contains, for example, the identifier specifying the neighboring router. The data storage area 330 contains data to be processed by the application 51 or 52 or the communication middleware 60. For example, when the application 51 or 52 or the communication middleware 60 is converted to an object, data used for executing object services is stored there. The data storage area 330 shown in FIG. 11 is an example in which the area comprises a service code 331 that identifies the object service, a source object identifier 332, an R/R flag 333 that indicates whether the message is a request message or a response message, an FU 334 for future use, a destination object identifier 335, and a service request/response parameter 336 that is data required for executing object services or a result obtained by executing the object services.

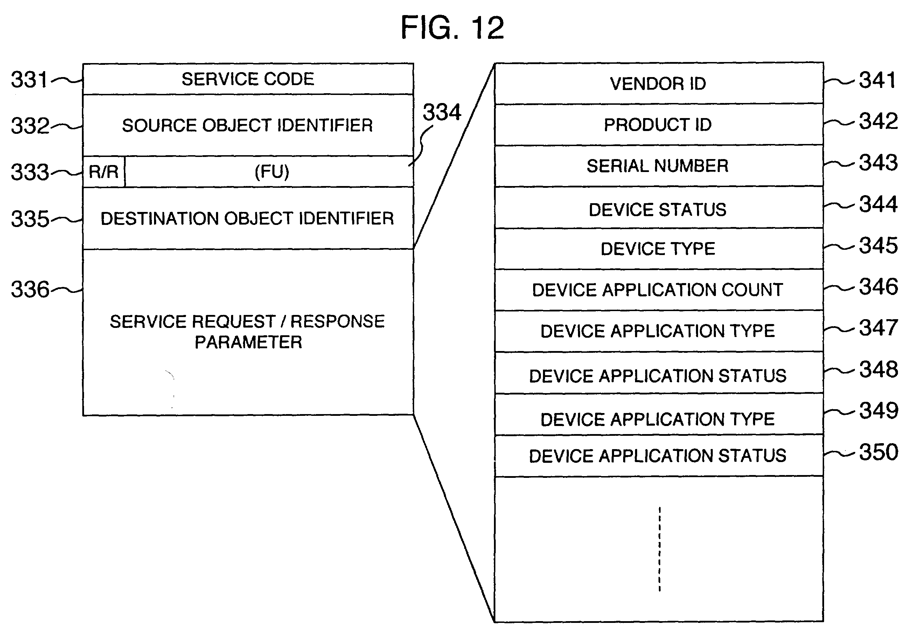

FIG. 12 is a diagram showing an example of the format of an operation start notification message that is issued to notify other devices that, when a device or a router is connected to the network, the connected device or router will start operation. The format of the operation start notification message is the same as that shown in FIG. 11 except the service request/response parameter 336. FIG. 12 shows the configuration of the service request/response parameter 336. The service request/response parameter 336 comprises a vendor ID 341, a product ID 342, a serial number 343, a device status 344, a device type 345, a device application count 346, a device application type 347 and 349, and a device application status 348 and 350 of a started device. The vendor ID 341, product ID 342, and serial number 343 are combined to globally and uniquely identify (within the system) the device. They are the manufacturer identifier, product identifier, and manufacture serial number, respectively. The device status 344 contains the operation status of the device. For example, the value of "1" indicates that the device is started, the value of "2" indicates that the device is in operation, and the value of "3" indicates that the device is stopped because of a failure. The device type 345 contains a code uniquely indicating the type of the device. For example, it contains a code indicating the type of hardware such as a refrigerator, an air conditioner, a personal computer, or a panel monitor. The device application types 347 and 349 contain the codes each uniquely indicating the type of application that is installed on the device. For example, when the device is a refrigerator, the code indicating the refrigerator control program is stored; when the device is an air conditioner, the code indicating an air conditioner control program is stored. When the application is an object-oriented application, the class identifier of the object corresponds to this code. In this case, the class identifier and the instance identifier are stored in the message. The device application status 348 or 350 contains the code indicating the status of the application installed on the device. For example, the value of "0" indicates that the application is stopped, the value of "1" indicates that the application is being initialized, the value of "2" indicates that the application is in operation, and the value of "3" indicates that the application is stopped because of a failure. The device application type and the device application status form a pair, and the message contains the number of pairs specified by the device application count 346.

Next, the processing of the transmission unit 61, reception unit 62, and API conversion unit 63, which are processing blocks included in the device 50 and the router 70 described above, will be described.

First, the transmission unit 61 included in the device 50 and the router 70 will be described.

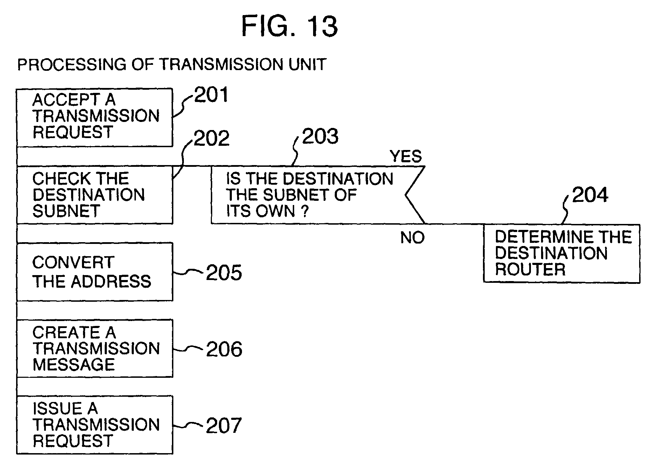

The transmission unit 61 receives a transmission request, composed of a high-level address identifying a destination device, transmission data and, depending upon the situation, the low-level address of a router via which the transmission data will be transmitted, from the reception unit 62 or the API conversion unit 63, creates a transmission message based on this transmission request, and issues the transmission request to the low-level protocol processing unit 53. FIG. 13 is an outline PAD diagram showing the processing flow of the transmission unit 61. Upon receiving the destination device high-level address, transmission data (data storage area 330 shown in FIG. 11) and, depending upon the situation, the low-level address of the router via which the transmission data will be transmitted, from the reception unit 62 or the API conversion unit 63, the transmission unit 61 accepts the request (step 201) and checks the NetID included in the high-level address to find the destination subnet (step 202). During this destination subnet checking processing, the transmission unit checks if the destination is the subnet of its own (step 203) and, if the destination is some other subnet, gets the high-level address of the destination router from the routing table 120 (step 204). Then, using the address conversion table 130, the transmission unit converts the high-level address of the destination device to the low-level address (step 205). At this time, if the destination is some other subnet, the transmission unit converts the high-level address of the destination router to the low-level address. Note that, when the low-level address of the router via which the transmission data will be sent is given by the reception unit 62 or the API conversion unit 63, steps 204 and 205 need not be executed. Next, the transmission unit creates a transmission message according to the communication message format 300 shown in FIG. 11 (step 206). The transmission unit creates the high-level protocol header storage area 320 and joins it to the data storage area 330 that was received. When the device is a router, the transmission unit stores the low-level address of the router in the LST_RUA 323. Then, the transmission unit passes the high-level protocol header 320, data 330, destination device low-level address SA, and the source device low-level address DA to the low-level protocol processing unit 53 to issue a transmission request (step 207).

Next, the reception unit 62 included in the device 50 and the router 70 will be described.

The reception unit 62, which performs reception processing based on the contents of a message received from the low-level protocol processing unit 53, has four functions. The first function is the client function of request/response communication through which a request is issued, for example, to some other device to execute its object service. In this case, the reception unit 62 receives a message in response to a request message sent from the transmission unit 61. The second function is the server function of request/response communication through which a request is issued, for example, to some other device to execute its object service. In this case, the reception unit 62 receives a message sent from some other device. The third function is the reception function of a router. This function transfers a message to the destination device and performs routing. The fourth function receives an operation start notification message that will be described later. The device 50 is assumed to have the first, second, and fourth functions as necessary, while the router 70 is assumed to have first, second, and third functions.

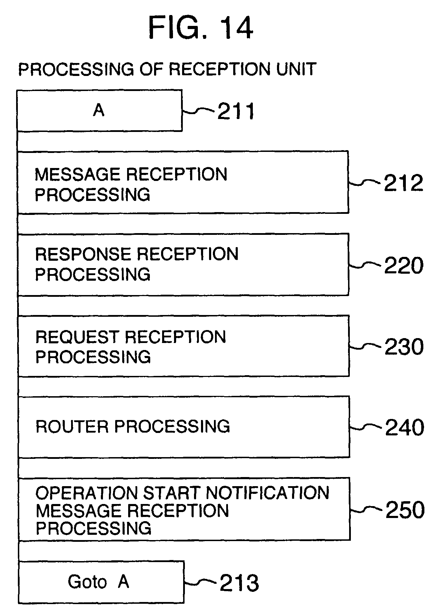

FIGS. 14, 15, 16, 17, and 18 are PAD diagrams showing the processing flow of the reception unit 62. In FIG. 14, the four functions described above correspond to step 220, step 230, step 240, and step 250, respectively. Referring to FIG. 14, the processing of the reception unit 62 will be outlined. Step 211 is a label. When the reception unit 62 receives a message in step 212, it executes step 220, step 230, step 240, or step 250 according to the contents of the received message and then, in step 213, returns control to step 211 which has label A. The following details step 220, step 230, step 240, and step 250.

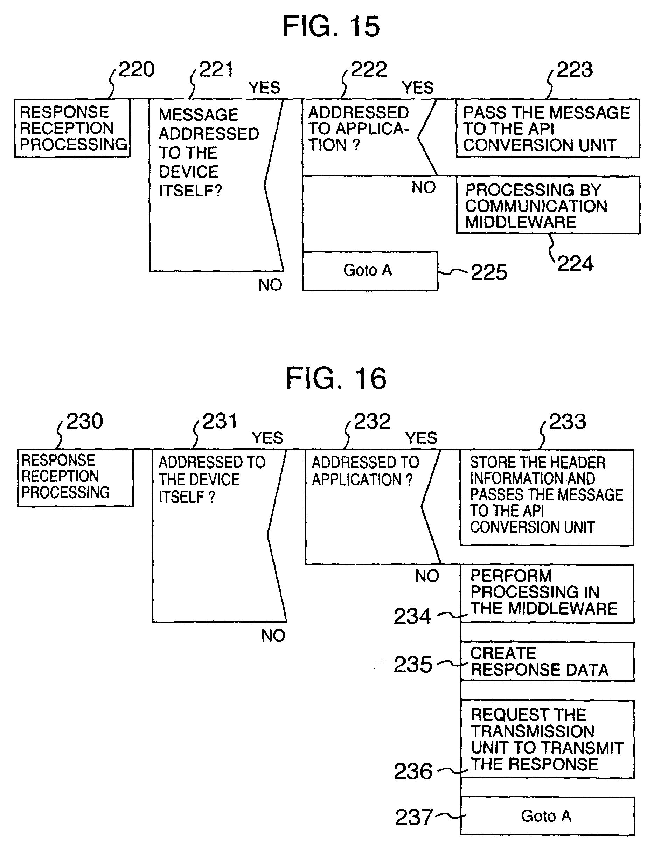

First, referring to FIG. 15, the reception processing shown in step 220 and performed by the client function of request/response communication will be described. The reception unit first checks in step 221 if the message is a response to the device itself and, if so, passes control to step 222. In step 222, the reception unit checks the message if it is addressed to one of applications 51-52 or to the communication middleware 60. If the message is addressed to one of the applications, the reception unit outputs the message to the API conversion unit to pass the message to the destination application (step 223). If the message is addressed to the middleware, the reception unit gets the response data from the message (step 224) and returns control from step 225 to label A (step 211) in FIG. 14.

Next, referring to FIG. 16, the request message reception processing shown in step 230 (server function of request/response communication) will be described. The reception unit first checks in step 231 if the message is addressed to the device itself and, if so, passes control to step 232. In step 232, the reception unit checks the message if it is addressed to one of applications 51-52 or to the communication middleware 60. If the message is addressed to one of the applications, the reception unit stores the header information and, at the same time, outputs the message to the API conversion unit 63 to pass the message to the destination application (step 233). If the message is addressed to the middleware, the reception unit performs the processing requested by the message (step 234), gets data (step 235), creates response data according to the format of the data storage area 330 shown in FIG. 11 (step 235), determines the response destination, requests the transmission unit 61 to transmit the response (step 236), and returns control to label A (step 237). As the response destination, the reception unit uses the source device high-level address (S_UA 321 shown in FIG. 11) included in the request message. When the message is returned via a router, the reception unit obtains from the request message the low-level address of the last router (LST_RUA in FIG. 11) via which the request message was sent and passes it to the transmission unit 61. In steps 234 and 235, the communication middleware is requested, for example, to write data to, or read data from, the tables owned by the communication middleware. These operations will be described later more in detail.

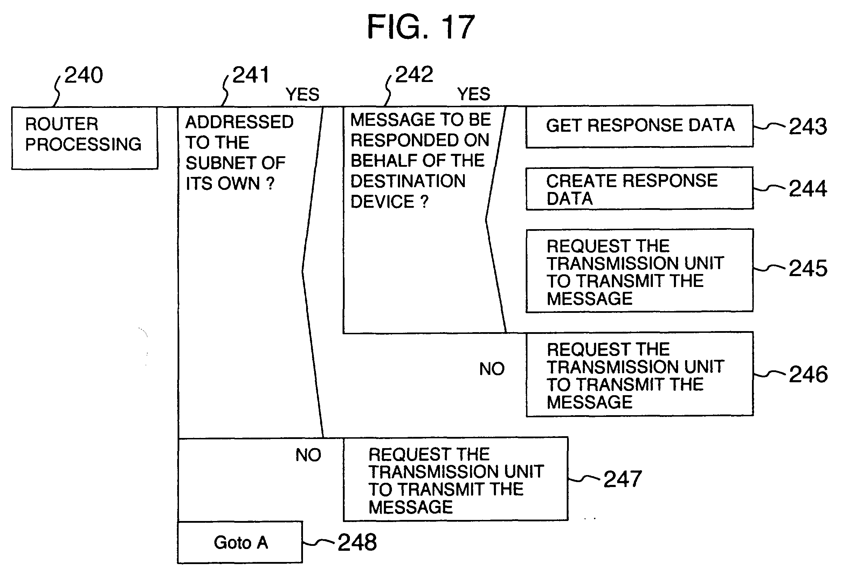

Next, referring to FIG. 17, the router processing shown in step 240 will be described. In step 241, the reception unit first checks if the message is addressed to a device connected to the subnet of its own. If so, control is passed to step 242. If the message is addressed to a device connected to some other subnet, control is passed to step 247. In step 242, the reception unit checks if the router can respond to the message on behalf of the destination device. If the router can respond, the reception unit gets data that is returned on behalf of the device based on the requested contents (step 243), creates response data according to the format of the data storage area 330 shown in FIG. 11 (step 244), determines the response destination, and requests the transmission unit 61 to transmit the response (step 245). If it is found in step 242 that the router cannot respond to the message, the reception unit transfers the message to the transmission unit 61 to transmit it to the destination device (step 246). If it is found in step 241 that the message is addressed to a device connected to some other subnet, the reception unit transmits the message to the transmission unit 61 to transmit it to the destination device (step 247). In step 248, control is returned to label A in FIG. 14. In step 242, the reception unit checks if the router can respond to the message on behalf of the destination device by checking if the message is an inquiry on data stored in the local device information table 110 of the destination device and, in addition, the router contains the information on the destination device in the device information table 140. In step 243, the reception unit gets the requested data from the device information table 140. Note that, when the D_GA 324, which is the destination device group address contained in the message, contains the identifier specifying the neighboring router, the reception unit does not transfer the message but executes the processing requested by the data storage area 330 and returns the response message to the requesting device.

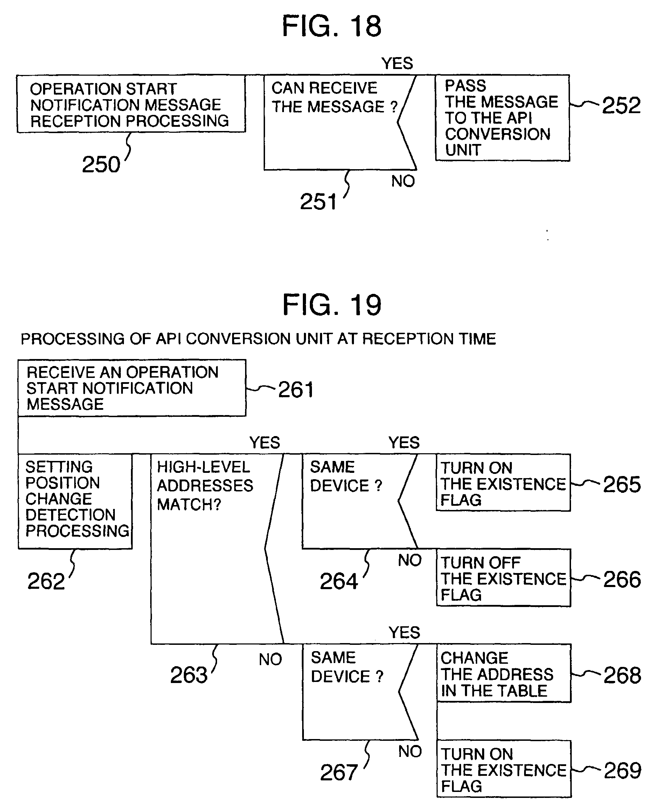

Next, referring to FIG. 18, the operation start notification message reception processing shown in step 250 will be described. The reception unit first checks if it will receive this message (step 251). When the reception unit receives the message, it passes the message to the API conversion unit 63 (step 252).

Next, the processing of the API conversion unit 63 will be described. The API conversion unit 63 has four functions: the function that issues a request to other devices requested by the application 51 or 52 and receives the response, the function that passes a request from other devices to the application 51 or 52 and receives the response, the function that manages the correspondence between the identifiers of other devices and high-level addresses, and the function that changes the contents of the API conversion table 100. The following describes the function that manages the correspondence between the identifiers of other devices and high-level addresses because the spirit of the present invention lies in that function. That is, the API conversion unit uses the API conversion table 100 to implement this function. When the application 51 or 52 issues a data transmission request to a device, it specifies the destination device by the device identifier stored in the device identifier 101 of the API conversion table 100. Upon receiving this identifier, the API conversion unit uses the API conversion table 100 to get the high-level address of the destination device and requests the transmission unit 61 to issue the data transmission request with this high-level address specified.

Next, the function of the API conversion unit 63 that changes the contents of the API conversion table 100 will be described. FIG. 19 is a PAD diagram showing how the API conversion unit changes contents of the API conversion table 100 when it receives an operation start notification message. When the API conversion unit receives an operation start notification message (step 261), it starts the setting position change detection processing (step 262) and checks if the source device high-level address included in the operation start message is in the API conversion table 100 (step 263). If the address is in the table, the API conversion unit checks if the source device included in the operation start message matches the device included in the API conversion table (step 264). The checking in step 264 is done by checking if the combination of the vendor ID, the product ID, and the serial number is in the API conversion table 100. If it is found in step 264 that the table contains the combination, the API conversion unit turns on the existence flag 106 in the API conversion table 100 (step 265); if the table does not contain the combination, the API conversion unit turns off the existence flag 106 (step 266). If it is found in step 263 that the source device high-level address included in the operation start message is not in the API conversion table 100, the API conversion unit 63 checks if the combination of the vendor ID, product ID, and serial number included in the operation start message is included in the API conversion table 100 to check if the source device included in the operation start message matches a device in the API conversion table (step 267). If the table contains the combination, the API conversion unit 63 writes the source device high-level address stored in the S_UA 321 of the operation start message into the high-level address 102 of the API conversion table 100 (step 268) and turns on the existence flag 106 (step 269). In steps 265 and 268, if source device in the operation start message is a device connected to the subnet of its own, the API conversion unit stores the source device low-level address stored in the SA 311 of the operation start message into the address conversion table 130 shown in FIG. 9.

The configuration of the device and the router according to present invention were described above.

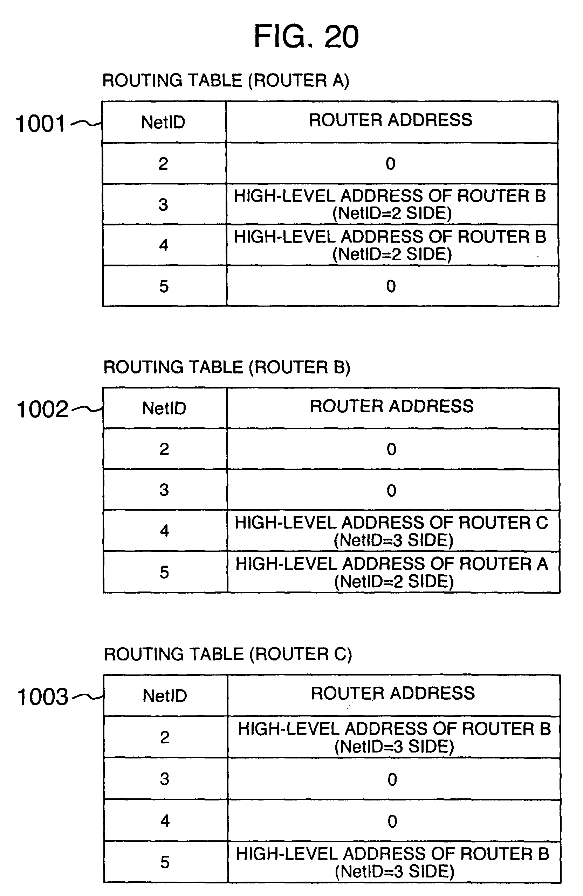

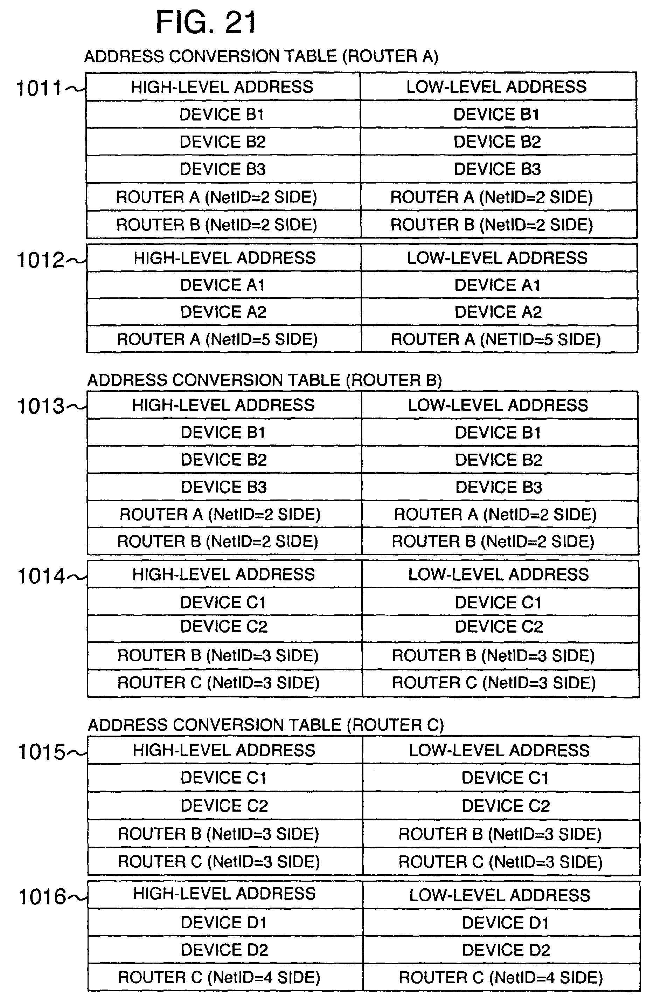

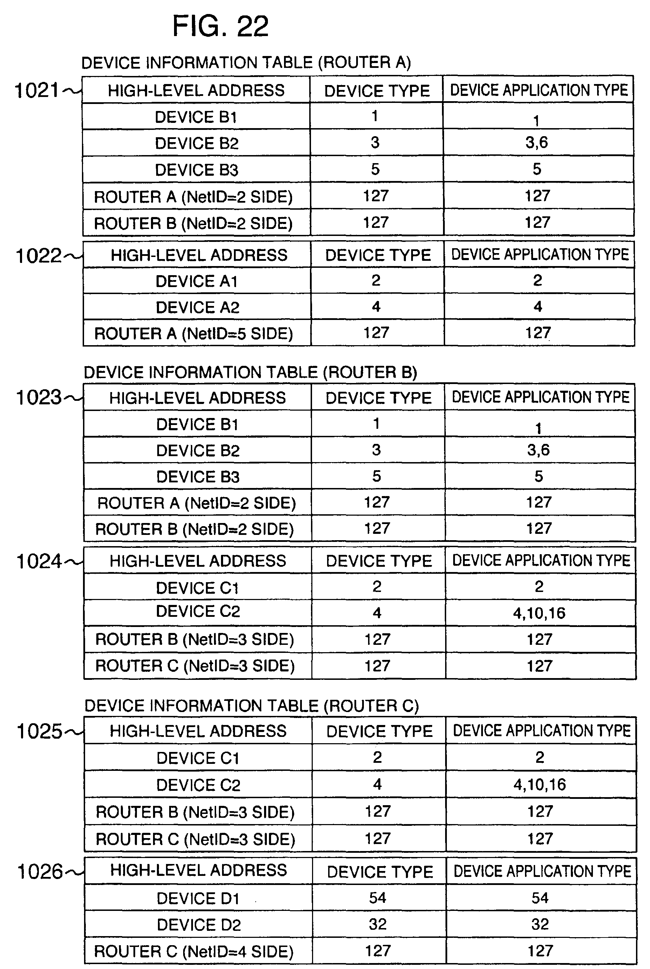

Next, the overall processing flow of the device and the router according to present invention will be described. In this example, a device type inquiry is issued from the device 3 to the device 6 in the system configuration shown in FIG. 2. FIG. 20 shows the contents of the routing tables (routing tables 1001, 1002, and 1003) of router A, router B, and router C (router 11, router 12, and router 13, respectively). FIG. 21 shows the contents of the address conversion tables (address conversion tables 1011-1016) of router A, router B, and router C (router 11, router 12, and router 13, respectively). Because the address conversion table is provided for each subnet connected to each router, the router has two address conversion tables. FIG. 22 shows the contents of the device information tables (device information tables 1021-1026) of router A, router B, and router C (router 11, router 12, and router 13, respectively). Because the device information table is provided for each subnet connected to each router, the router also has two device information tables. Now, assume that the device 3 has the API conversion table 100 shown in FIG. 6, the routing table 120 shown in FIG. 8, and the address conversion table 130 shown in FIG. 9. Also assume that the device 6 has the local device information table 110 whose contents are shown in FIG. 7 and that part of the contents is already in the device information tables 1024 and 1025 of the routers B and C shown in FIG. 22.

First, in the device 3, "air conditioner 2" that is the identifier of the destination device 6 and inquiry data created according to the format of the data storage area 330 shown in FIG. 11 are passed from the application to the API conversion unit 63. The API conversion unit 63 uses the received "air conditioner 2" that is the identifier of the destination device and the API conversion table 100 to get the high-level address 0h3002 of the destination device and issues a transmission request to the transmission unit 61. The transmission unit 61 gets destination subnet "3" from the high-level address 0h3002 of the destination device, gets the high-level address 0h20AA of the router, via which the request is to be sent, from the routing table 120 shown in FIG. 8, gets the low-level address of the router using the address conversion table 130 shown in FIG. 9, creates a message according to the high-level protocol header format shown in FIG. 11, and issues the transmission request to the low-level protocol processing unit 53. Then, the message in the format shown in FIG. 11 is sent to the router 12 over the network 21.

When the router 12 receives this message, the reception unit 62 starts the router processing shown in FIG. 17. First, because the destination subnet of the message is 3, the reception unit 62 finds that the message is addressed to the subnet of its own and then checks if the router can respond to the message on behalf of the destination device. That is, the reception unit finds, from the contents of the message, that the inquiry is about the device type of the device 6. In addition, the reception unit finds that the requested content is included in the device information table 1024 of its own. Because the router can respond to the message on behalf of the destination device, the reception unit reads the device type of "2" of the requested device 6 (device C1), creates response data according to the format of the data storage area 330 shown in FIG. 11, and transmits the created response to the transmission unit 61. At this time, the transmission destination is the device 3 which is the requesting source, and the source high-level address 0h2003 included in the request message is used as the destination high-level address. Next, the transmission unit 61 gets the destination subnet value of "2" from the high-level address 0h2003 of the destination device, finds that the message is addressed to the subnet of its own from the routing table 1002 shown in FIG. 20 (the value of "0" indicates the subnet of its own). In addition, the transmission unit 61 gets the low-level address of the transmission destination device 3 (device B1) from the address conversion table 1013 shown in FIG. 21, creates a message according to the high-level protocol header format shown in FIG. 11, and then issues the transmission request to the low-level protocol processing unit 53 to transmit the response message to the device 3. After that, response processing for the response message is performed according to the steps shown in FIG. 15, and device type of the device 6 is returned to the source application as the response data.

For example, the present invention described above allows other devices to get information on the device 6 regardless of the transmission reliability of the network to which the device 6 is connected. In other words, even when the network reliability is low, or the device 6 is temporarily a hidden terminal, or the device 6 is not always ready for communication, information as to what kind of device is used in the system may be obtained more reliably. In addition, the present invention eliminates the need for the target device to perform response processing, thus decreasing the load of this device. Moreover, reducing the need to re-transmit messages at the time of a failure prevents the load of the network and the router from increasing. Because, in a home system or building system for which the present invention is intended, the transmission reliability of the network is decreased by hidden terminals, fading, or noises and, in addition, the devices are not always ready for communication. Therefore, the present invention is particularly useful in such a system.

Next, what is performed when a new device is added to a distributed system composed of such devices and routers described above will be described. In the example in the following description, device B1 is added to the configuration shown in FIG. 2.

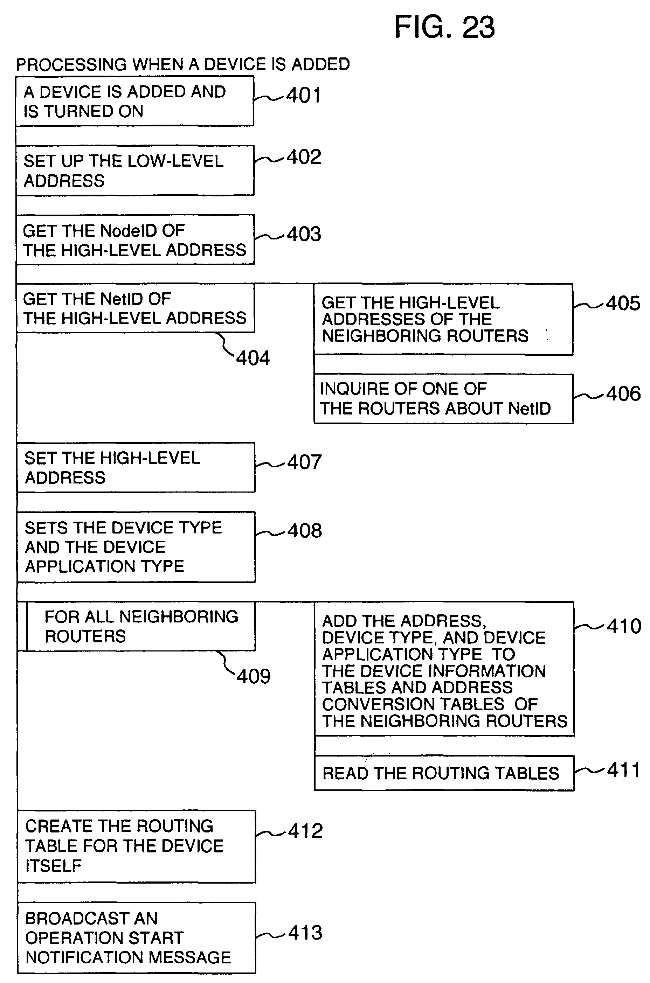

FIG. 23 is a PAD diagram showing the flow of processing that is executed when a device is added. The following describes the processing shown in FIG. 23 wherein the device 3 (device B1) shown in FIG. 2 is added. First, the device 3 is added to the network and is turned on (step 401). Then, the low-level address of the device 3 is set up in the method defined by the low-level communication protocol (step 402). Then, the device 3 gets the NodeID of the high-level address (step 403). To do so, the low-level address is converted, for example, by some function. Then, the device 3 uses the broadcast function of the low-level communication protocol to inquire of other devices about NetID of the subnet of it own (step 404). To do so, the device 3 uses, for example, the broadcast function of the low-level communication protocol to inquire about the high-level addresses of the neighboring routers (routers 11 and 12 in FIG. 2) (step 405) and inquires of one of the routers (for example, router 11) about NetID (step 406). Or, the device 3 sets the broadcast address in the destination low-level address DA according to the message format shown in FIG. 11, sets the group address of the neighboring router in the destination high-level address, and sends a message inquiring about NetID of its own subnet. At this time, in FIG. 2, the routers 11 and 12 perform reception processing and each return NetID=2. The address of the neighboring router is also obtained from the message. Then, the device 3 sets the high-level address and the low-level of the device obtained in steps 403 and 404 in the local device information table 110 (step 407). Then, the device 3 inquires of the applications 51 and 52 about the types and status and sets this information, as well as its own device, in the local device information table 110 (step 408). Then, for all the neighboring routers (step 409), the device 3 sends a message shown in FIG. 11 to add the low-level address, high-level address, device type, and device application type of the device 3 to the device information table 140 and the address conversion table 130 of the neighboring routers with the use of the high-level address of the neighboring routers obtained in step 404 (step 410). Then, the device 3 reads the routing tables 120 of the neighboring routers (step 411). When the device 3 has read routing tables 120 of all the neighboring routers, it creates the routing table 120 for itself (step 412). That is, the device 3 creates the routing table at this time by getting the NetIDs of all the subnets in the system and finding to which neighboring router a message is to be sent in order to send it to each subnet. More specifically, the routing tables 120 of the router 11 and the router 12, each of which is the neighboring router of the device 3, are the routing tables 1001 and 1002 shown in FIG. 20. From these routing tables, the high-level address of the neighboring router is obtained for each NetID ("2" - "5") according to the rules given below in order to create the routing table 120 such as the one shown in FIG. 8.
Rule 1: If the router address is not set for all the neighboring routers, "0" is set.
Rule 2: If the router address is not set for all the neighboring routers except one neighboring router, the high-level address of that neighboring router is set.
Rule 3: If the router addresses are set for all the neighboring routers, one of them is selected and set.

That is, in the example shown in FIG. 20, the high-level addresses are set as follows. For NetID=2, "0" is set as shown in FIG. 8 according to rule 1; for NetID=3, the high-level address of router B, that is, 0h20AA, is set as shown in FIG. 8 according to rule 2; for NetID=4, the high-level address of router B, that is, 0h20AA, is set as shown in FIG. 8 according to rule 3; for NetID=5, the high-level address of router A, that is, 0h20BB, is set as shown in FIG. 8 according to rule 2. Then, the device 3 completes network connection processing and creates an operation start notification message according to the message format shown in FIG. 12, and broadcasts it to other devices (step 413).

The processing described above automatically sets up the routing information when a device is added to the network, thus providing the user with the plug-and-play feature that eliminates the need to set up routing information.

Upon receiving this message, other devices can detect the addition of a new device immediately after it is added to the network and, from the contents of the operation start notification message, know the type of the connected device and the type of applications. This eliminates the need for other devices to directly inquire of the added device about the device type or application type, reducing the network load that is increased by the inquiries about the new device. In addition, upon receiving an operation start notification message, each device performs the processing shown in FIG. 13 to change the API conversion table 100. For example, even when a device is moved and its address changes, applications do not have to worry about the change but can continue to use the old device identifier as before.

Next, what is performed when a new network is added to a distributed system, that is, what is performed when a new router is added, will be described. In the example in the following description, router C is added to the configuration shown in FIG. 2.

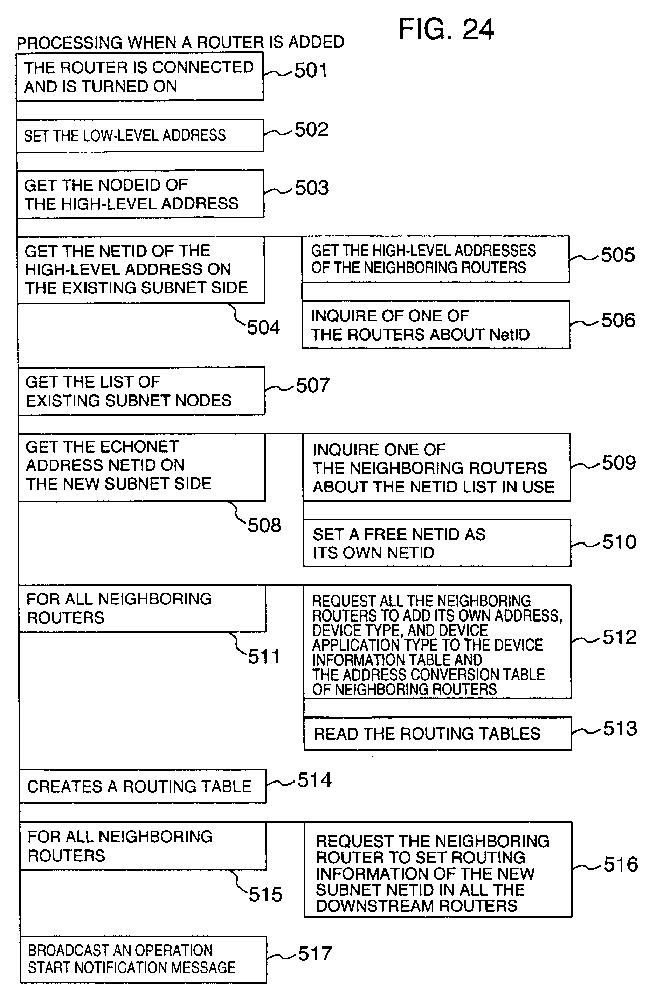

FIG. 24 is a PAD diagram showing the flow of processing that is executed when a router is added. The following describes the processing shown in FIG. 24 wherein the router 13 (router C) shown in FIG. 2 is added. In the description, it is assumed that the devices 8 and 9 connected to the network 23 are not turned on and therefore not ready for communication. First, the router 13 is connected to the network 22 and is turned on (step 501). Then, the low-level address of the router 13 on the side of the network 22 is set according to the method defined by the low-level communication protocol (step 502). Then, the router 13 gets the NodeID of the high-level address on the side of the network 22 (step 503). Then, through the broadcast communication function of the low-level communication protocol, the router 13 issues to other devices an inquiry about the NetID of its own subnet connected to the network 22 and gets it ("3" in this example) (step 504). The processing of subsequent steps 505-506 are the same as that of steps 405-406 described in FIG. 23. Then, the router 13 gets the list of high-level addresses and low-level addresses of the devices connected to the connected subnet ("3" in this example) (step 507). To do so, when some other neighboring router is connected to the subnet NetID=3, the contents of the address conversion table of the neighboring router are obtained; when no other neighboring router is connected, an inquiry is issued through the broadcast function of the low-level communication protocol to inquire of each device about the high-level address and the low-level address in order to obtain them. Then, the router 13 starts getting the NetID of the subnet on the side of new network 23 (step 508). First, the router 13 inquires one of the neighboring routers about the NetID list in use to get it (step 509), decides a free value as the NetID of the subnet on the side of the network 23 ("4" in this example) and, using this value, sets up the high-level address of the new subnet (step 510). Then, the router 13 requests all the neighboring routers (step 511) to add its own (router 13) high-level address, low-level address, and device type to their device information tables and the address conversion tables (step 512) and, in addition, reads the routing tables 120 of the neighboring routers (step 513). When the router 13 has finished reading the routing tables 120 of all the neighboring routers, it creates the routing table 120 for itself (step 514). The processing of step 514 is omitted here because the processing is the same as that of step 413 in FIG. 23. Then, the router 13 requests all the neighboring routers (step 515) to set the routing information on the new subnet NetID=4 (step 516). In step 516, the neighboring router performs the similar setup processing for the downstream neighboring routers (on the side of the subnet other than the side on which information from the new router 13 is received). As a result, information about the connection of the new router is sent to, and its routing information is set in, all the routers. Then, router 13 creates an operation start notification message according to the message format shown in FIG. 12 and broadcasts it to other devices (step 517).

The processing described above automatically sets up the routing information when a router is added to the network, thus providing the user with the plug-and-play feature that eliminates the need to set up routing information. That is, a router performs routing and other operations, as described above, assuming that the tables shown in FIGS. 8-10 and FIG. 20-22 have already been set up. Automatic setup that is executed when a device or a router is connected to the network automatically creates the contents of the tables, thus eliminating the need for the user to set up the tables.

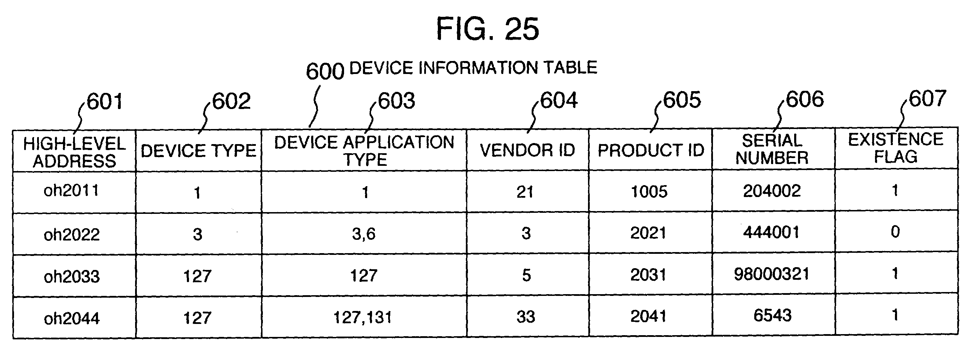

The method described above does not consider the deletion of information from the device information table maintained by each router. However, when a device is moved from one subnet to another, it is necessary to change the device information table maintained by each router. The following describes this processing. FIG. 25 is a diagram showing the configuration of the device information table maintained in a router when this function is executed. Referring to FIG. 25, a device information table 600 comprises a high-level address 601, a device type 602, a device application type 603, a vendor ID 604, a product ID 605, a serial number 606, and an existence flag 607. The high-level address 601, device type 602, and device application type 603 are the same as those of the device information table 140 shown in FIG. 10, and the vendor ID 604, product ID 605, serial number 606, and existence flag 607 are the same as those of the API conversion table 100 shown in FIG. 6. Upon receiving an operation start notification message from a device newly connected to the network, a router, which has the table described above, reads the vendor ID, product ID, and serial number from the newly added device and adds them to its own device information table when the device is connected to the subnet to which the router is connected and, at the same time, sends a message containing this information to the downstream neighboring routers. Upon receiving this message, each neighboring router checks if the device indicated by the vendor ID, product ID, and serial number contained in the message matches one of the devices stored in its own device information table. If there is a matching device, the router deletes it from the table; if there is not a matching device, the router sends this message to the downstream neighboring router. The processing described above automatically changes the device information table even when a device is moved from one subnet to another. In this way, when a device is moved, this method immediately deletes routing information on the deleted device from the table in the router, making the routing table smaller and more accurate.

The following describes some of the effects achieved by the above embodiment.
(1) Even when the network reliability is low, or there is a hidden terminal, or a device is not always ready for communication, the method according to present invention gives information as to what kind of device is used in the system more reliably without increasing the device or network load.
(2) Automatic setup of routing information that is executed when a device is connected to the network eliminates the need for the user to set up the routing information.
(3) Automatic setup of network and routing information that is executed when a network is added eliminates the need for the user to set up the network and routing information.
(4) The method detects that a device is moved and thus the address is changed with no significant increase in the load, allowing applications accessing the device to access it with the same identifier that was used before the movement.
(5) When a device is moved, this method immediately deletes routing information on the deleted device from the table in the router, making the routing table smaller and more accurate.

## Claims

1. A communication apparatus connected to a plurality of communication networks, each of which has at least one device, and relaying communication information between said plurality of communication networks, comprising:
a bus (1003);
a receiver (1004) connected to said plurality of communication networks for receiving device information from a device connected to one of said plurality of communication networks, said device information identifying the device;
a storage unit (1000) connected to said receiver (1004) through said bus (1003) for storing the device information received by said receiver (1004);
a processor (1001) connected to said storage unit (1000) through said bus (1003) for creating a response in response to a request using the device information stored in said storage unit (1000), when said receiver (1004) receives said request transmitted from a device connected to a first communication network of said plurality of communication networks to a device connected to a second communication network of said plurality of communication networks, said request inquiring about a function of the device connected to said second network; and
a transmitter (1004) connected to said processor (1001) through said bus (1003) and connected to said plurality of communication networks for transmitting the response to said first communication network.

2. The apparatus of claim 1, wherein
said communication apparatus is a router, and
said transmitter (1004) transmits information related to the request to the device via the second communication network.

3. The apparatus of claim 1, wherein said request is control information for controlling a device connected to one of the communication networks.

4. The apparatus of claim 3, wherein
said receiver (1004) receives a result of the control executed in the controlled device, and
said transmitter (1004) transmits the result of the control to the first communication network.

5. The apparatus of claim 1, wherein said storage unit (1000) stores the device information on other devices connected to said plurality of communication networks.

6. The apparatus of claim 1, wherein said receiver (1004) receives the request transmitted from the device connected to the first communication network, and preferably also from some other communication apparatus connected to the first communication network.

7. The apparatus of claim 1, wherein said receiver (1004) receives the device information of a device connected to one of said plurality of communication networks, when a connect condition of the device is changed.

8. The apparatus of claim 1, wherein, when the communication apparatus connected to a third communication network is connected to the second communication network,
said receiver (1004) receives a connect notification from the communication apparatus connected to the third communication network,
said transmitter (1004) transmits the device information stored in said communication apparatus to the communication apparatus connected to the third communication network, based on said connect notification, and
said receiver (1004) receives the device information stored in the communication apparatus connected to the third communication network.

9. A remote control method for controlling devices in a distributed system including a plurality of communication networks interconnected though routers, said remote control method comprising the steps of:
providing, by each of said routers, device information to identify the devices connected to the router through one of the communication networks;
transmitting a control request inquiring about a function of a device connected to a second communication network of said plurality of communication networks, from a control apparatus connected to a first communication network of said plurality of communication networks;
receiving the control request by the router;
transmitting, by said router, control information related to the control request to the device connected to said second network;
controlling the device connected to the second communication network in accordance with the control information;
creating, by the router, a response which is a result of said control using the device information;
transmitting, by the router, the response to the control apparatus via the first communication network; and
receiving the response by the control apparatus, through the first communication network.

10. The method of claim 9, wherein, when a connect condition of devices to said plurality of networks is changed, said router receives the device information on the changed devices.

11. The invention of claim 7 or 10, wherein the change in the connect condition includes adding a new device to one of the communication networks, and/or moving the device from one network to another, and/or removing the device from one of the communication networks.

12. The method of claim 9, further comprising the steps of:
recognising that the router is connected to a new network; and
transmitting, by the newly connected router, the device information stored in said newly-connected router to other routers connected to said newly connected network in response to said step of recognition.

13. The invention of claim 1 or 9, wherein said device information includes function information identifying the function of the device, and/or address information showing an address of the device in the communication networks.

14. The invention of claim 13, wherein said function information includes information showing a type of the device and/or information showing a type of an application program of the device.

15. The method of claim 14, wherein said step of providing device information provides not only the device information on the devices connected to the first network but also the device information on other devices connected to said plurality of networks.
